# EUROPÄISCHE PATENTANMELDUNG

(11) **EP 2 386 468 A2**
(43) Veröffentlichungstag der Anmeldung: **16.11.2011**
(21) Anmeldenummer: 11003734.8
(22) Anmeldetag: 06.05.2011
(51) Int. Cl.: B62D 55/30

(54) **Vorrichtung zum Spannen von Raupen- und/oder Baggerketten mit Stickstoff- und Hydraulikeinheiten**

(30) Priorität: 11.05.2010 DE 202010006561 U
(71) Anmelder: ATN GmbH, 58313 Herdecke (DE)
(72) Erfinder: Nikolic, Zoran, 58313 Herdecke (DE)
(74) Vertreter: Meinke, Jochen

(57) **Zusammenfassung**

Die Erfindung betrifft eine Vorrichtung (1) zum Spannen von Raupen- und/oder Baggerketten. Um das Spannen von Raupen- und/oder Baggerketten zu vereinfachen und zu verbilligen, schlägt die Erfindung vor, dass die Vorrichtung (1) in Form einer kombinierten Stickstoff- und Hydraulikeinheit vorliegt, die eine Stickstoffeinheit (2) und eine Hydraulikeinheit (3) aufweist.

## Beschreibung

Die Erfindung betrifft eine Vorrichtung zum Spannen von Raupen- und/oder Baggerketten.

Das Spannen derartiger Ketten erfolgt herkömmlich durch Federpakete, die teilweise sehr schwer und groß sind und erhebliche Kosten verursachen. Zudem können diese leicht verschmutzen und bedürfen dann einer aufwendigen Reinigung und Instandsetzung. Auch sind Spannzylinder mit Elastomerfüllungen bekannt.

Aufgabe der Erfindung ist es, eine Lösung zu schaffen, mit der das Spannen von Raupen- und/oder Baggerketten vereinfacht und verbilligt wird, und zwar sowohl bei der Anschaffung, wie auch im laufenden Unterhalt.

Diese Aufgabe wird gemäß der Erfindung durch eine Vorrichtung mit einer kombinierten Stickstoff- und Hydraulikeinheit gelöst. Die Stickstofffüllung verhindert sowohl eine Korrosion, als auch eine Alterung der eingesetzten Dichtelemente. Vom Abdrücken verbliebenes Restöl bietet den weiteren Vorteil der Verminderung metallischer Reibung innerhalb des Zylinders. Durch den Einsatz des Stickstoffs ergeben sich, anders als bei bekannten Elastomerfüllungen, keine temperaturbedingten Druckveränderungen.

Durch die Vereinigung der Stickstoff- mit einer bekannten Hydraulikeinheit ergibt sich ein Baukastensystem. Bereits vorhandene Fetteinheiten können weiterhin eingesetzt werden. Darüber hinaus sind nur noch wenige Ersatzteile notwendig, so dass die Lagerhaltung entsprechend reduziert werden kann. Ergeben sich nach längerem Gebrauch Verschleiß oder Undichtigkeiten, kann eine neue Fetteinheit eingewechselt werden, ohne den Stickstoffzylinder auswechseln zu müssen. Dazu sind beide Einheiten miteinander lösbar verbunden, beispielsweise mittels Zapfen und Bohrung und einem Verbindungselement, beispielsweise einem Hohlspannstift, das einfach herausgeschlagen und neu wieder eingesetzt werden kann.

Um an wechselnde Anforderungen anpassbar zu sein, kann die Stickstoffeinheit sowohl unterschiedliche Fülldrücke, als auch unterschiedliche Kolbenhöhen aufweisen. Das Zylinderrohr und der Zylinderboden der Stickstoffeinheit sind entweder miteinander verschweißt oder verschraubt. Bei gleichen Zylinderrohren bietet dies die Möglichkeit, den Zylinderboden an unterschiedliche Kundenbedürfnisse anzupassen.

Zum Abweisen von Schmutz und Erdreich weist die gesamte Vorrichtung vorteilhaft eine glatte und runde Oberfläche auf. Hierdurch können sich keine Steine und dgl. mehr zwischen die einzelnen Elemente, wie herkömmlich bei Spiralfedern, einklemmen. Dadurch werden die bekannten und gefürchteten Schläge im Fahrwerk oder in der Kette und dadurch ausgelöste Schäden vermieden.

Weiter entfallen durch die erfindungsgemäße Lösung die zeit- und kostenaufwendige Beschaffung, Lagerhaltung, Frachtzeiten und Logistik von Spiralfedern.

Aufgrund des erfindungsgemäßen Baukastenprinzips kann mit wenigen Produkten und Baugrößen die gesamte Fertigungspalette der Hersteller einschlägiger Raupen und Bagger abgedeckt werden. Aufgrund der relativ kleinen Baugröße sind gleichwohl Kosten möglich, die mit konventionellen Federpakten vergleichbar sind oder darunter liegen.

Die Erfindung ist nachstehend anhand der Zeichnung näher erläutert. Diese zeigt in:
- Fig. 1: die komplette Stickstoff-/Hydraulikeinheit im Querschnitt, und in

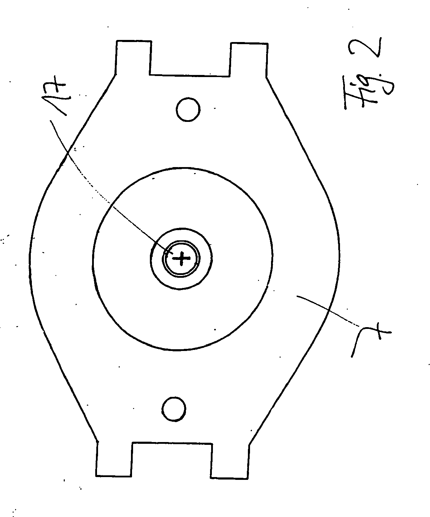

- Fig. 2: einen Querschnitt durch den Zylinderkolben der Stickstoffeinheit.

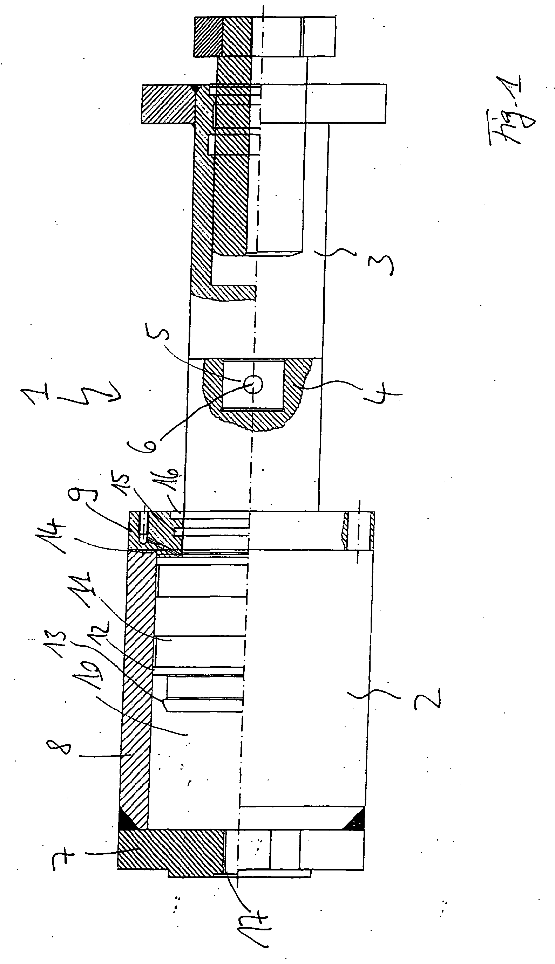

Fig. 1 zeigt eine erfindungsgemäße Vorrichtung, die mit dem Bezugszeichen 1 versehen ist.

Die Vorrichtung 1 liegt in Form einer Stickstoff-/Hydraulikeinheit vor, die eine Stickstoffeinheit 2 und eine Hydraulikeinheit 3 aufweist, die wiederum mittels eines Zapfens 4 und einer Bohrung 5 sowie einem Verbindungselement 6 miteinander verbunden sind. Bei der Hydraulikeinheit 3 kann es sich um eine herkömmliche aus dem Stand der Technik bekannte Hydraulikvorrichtung handeln.

Die Stickstoffeinheit 2 besitzt einen Zylinderboden 7, ein Zylinderrohr 8 und einen Zylinderkopf 9. In dem hierdurch gebildeten Gasraum 10 ist ein Kolben 11 in Längsrichtung verschiebbar. Dieser weist zwei Kolbenführungsringe 12, ein Nutringdichtung 13, einen Flansch 14, einen O-Ring 15 und einen Schmutzabstreifer 16 auf. Der Zylinderboden 7 ist mit einem Füll- und Rückschlagventil 17 ausgerüstet. Durch unterschiedliche Fülldrücke lassen sich beispielsweise verschiedene Einsatzgewichtsveränderungen anpassen. Anders als bei Elastomeren ergeben sich keine temperaturbedingten Druckveränderungen. Auch der Zylinderboden 7 kann entsprechend den Kundenbedürfnissen angepasst und in verschiedener Form ausgeführt werde. Dasselbe gilt auch für die Gesamtdimensionierung der Einheit. Durch die glatte, runde Oberfläche fällt Schmutz, Erdreich und dgl. ab. Dadurch können sich keine Steine, Steinchen oder sonstige störende Elemente, wie bei den herkömmlichen Spiralfedern, einklemmen. Schläge ins Fahrwerk oder in die Kette werden hiermit dauerhaft und zuverlässig vermieden. Die Stickstoffeinheit ist weitgehend wartungsarm, durch die Stickstofffüllung werden sowohl Korrosionserscheinungen, als auch alterungsbedingte Veränderungen der Dichtelemente vermieden. Im Kolben verbleibendes Restöl vom Abdrücken der Einheit vermeidet eine metallische Reibung des Kolbens innerhalb des Zylinders bzw. vermindert diese stark. Auch hierdurch ergibt sich eine hohe Standfestigkeit und Lebensdauer.

Natürlich ist die Erfindung nicht auf die dargestellten Ausführungsbeispiele beschränkt. Weitere Ausgestaltungen sind möglich, ohne den Grundgedanken zu verlassen.

## Patentansprüche

1. Vorrichtung (1) zum Spannen von Raupen- und/oder Baggerketten,
**dadurch gekennzeichnet,**
**dass** sie in Form einer kombinierten Stickstoff- und Hydraulikeinheit vorliegt, die eine Stickstoffeinheit (2) und eine Hydraulikeinheit (3) aufweist.

2. Vorrichtung nach Anspruch 1,
**dadurch gekennzeichnet,**
**dass** beide Einheiten (2, 3) miteinander lösbar verbindbar sind.

3. Vorrichtung nach Anspruch 1 oder 2,
**dadurch gekennzeichnet,**
**dass** beide Einheiten (2, 3) mittels Zapfen (4) und Bohrung (5) und einem Verbindungselement (6) miteinander verbunden sind.

4. Vorrichtung nach einem der vorangehenden Ansprüche,
**dadurch gekennzeichnet,**
**dass** die Stickstoffeinheit (2) unterschiedliche Fülldrücke und/oder Kolbenhöhen aufweist.

5. Vorrichtung nach einem der vorangehenden Ansprüche,
**dadurch gekennzeichnet,**
**dass** ein Zylinderrohr (8) und ein Zylinderboden (7) der Stickstoffeinheit (2) miteinander verschweißt oder verschraubt sind.

6. Vorrichtung nach Anspruch 5,
**dadurch gekennzeichnet,**
**dass** der Zylinderboden (7) an unterschiedliche Einsatzbedingungen anpassbar ist.

7. Vorrichtung nach einem der vorangehenden Ansprüche,
**dadurch gekennzeichnet,**
**dass** die gesamte Vorrichtung eine glatte und runde Oberfläche zum Abweisen von Schmutz und Erdreich aufweist.
